Europäisches Patentamt

European Patent Office

Office européen des brevets

(19)

Publication number: **0 296 330**
**A2**

# EUROPEAN PATENT APPLICATION

(21) Application number: **88106426.5**

(22) Date of filing: **21.04.88**

(51) Int. Cl.⁴ **F15B 13/02 , F16K 11/056**

(30) Priority: **05.05.87 PL 265513**
**06.05.87 PL 265569**

(43) Date of publication of application:
**28.12.88 Bulletin 88/52**

(84) Designated Contracting States:
**AT DE GB**

(71) Applicant: **Gwarectwo Mechanizacji**
**Gornictwa "POLMAG", Centrum**
**Mechanizacji Gornictwa "KOMAG"**
**ul. Pszczynska 37**
**44-101 Gliwice(PL)**

(72) Inventor: **Wolek, Wladyslaw**
**Kraków**
**ul. Stachiewicza 27/13(PL)**
Inventor: **Cygankiewicz, Tadeusz**
**Chrzanów**
**ul. Trzebinska 19/38(PL)**

(74) Representative: **Ahner, Francis et al**
**CABINET REGIMBEAU 26, avenue Kléber**
**F-75116 Paris(FR)**

(54) **A three-way distribution valve.**

(57) This invention relates to a three-way hydraulic
distribution valve connecting a hydraulic cylinder either to a delivery pipe or to a drain pipe, and finding
its application particularly as a pulse distribution
valve or as a controller of a main distribution valve.

Inside the body of the valve there is mounted a
spherical closing component 4 provided with two
grooves 17 and 21., perpendicular to each other.
The end of a control lever 6 is placed inside groove
17 . Height of groove 21 is smaller than the radius
of closing component 4 . whereas height of groove
17 is at least equal to the sum of radius of ball 4
and half dimension of the larger side of lever 6 in its
transversal section. Lever 6 is provided with a crank
18 and a pin mounted in a tappet, crosswise to axis
6 . Tappet 16 is brought in plane motion by means
of push button 12 . The back motion is obtained by
means of a spring 14 .

Fig. 2

# A three-way distribution valve

The subject of this present invention is a three-way distribution valve connecting a hydraulic cylinder to a supply pipe or a drain pipe and finding its application as, particularly, a pulse distribution valve or a controller of a main distribution valve.

The three-way hydraulic distribution valve known from Polish Patent Application Specification No. P.254,147 comprises a spherical closing component rotatably mounted inside the body of the valve between two sealing seats. The closing component has a truncated dome and is controlled by means of a control lever whose one end engages a groove in the closing component, the height of that groove being smaller than the radius of the closing component. The body comprises a delivery canal connected to a delivery pipe, a drain canal connected to a drain pipe, and a canal connected to a hydraulic cylinder and located opposite to the edge of the spherical dome.

By rotating the lever by a slight angle between the bevelled edge of the spherical dome and one of the seats a gap is formed through which the cylinder is connected either to the drain pipe or to the delivery pipe.

The closing component according to Polish Patent Application Specification No. P.254,147 actually does not contact the sealing seats during the control operation thereby impairing guiding. The sharp edge of the truncated spherical dome damages the seat.

Manual control of hydraulic distribution valves is known and generally used. A rotary lever or an eccentric cam is the final-control element. The return movement is effected by means of springs.

The disadvantage of these distribution valves is a high force necessary for their resetting. The aim of this present invention has been to develop a three-way distribution valve in which the force necessary for resetting is slight and the closing component continuously contacts the seats without damaging them.

The aim has been achieved in a three-way hydraulic distribution valve connecting a hydraulic cylinder either to a delivery pipe or to a drain pipe. The distribution valve comprises a spherical closing component which, in addition to the known groove for the control lever has another groove perpendicular to that for the control lever. The height of that groove is smaller than the radius of the closing component, whereas the height of the groove for the control lever is at least equal to the sum of the radius of the closing component and half the dimension of the larger side of the control lever. Thus, the maximum sectional area is obtained with minimum groove dimensions.

The control lever is mounted in the hole passing through the axis of the spherical closing component and is provided with a crank with its pin mounted in a tappet transversely to the axis. The tappet is brought into plane motion by means of a push button. The control lever is sealed in the hole of the body with sealing rings using a screw.

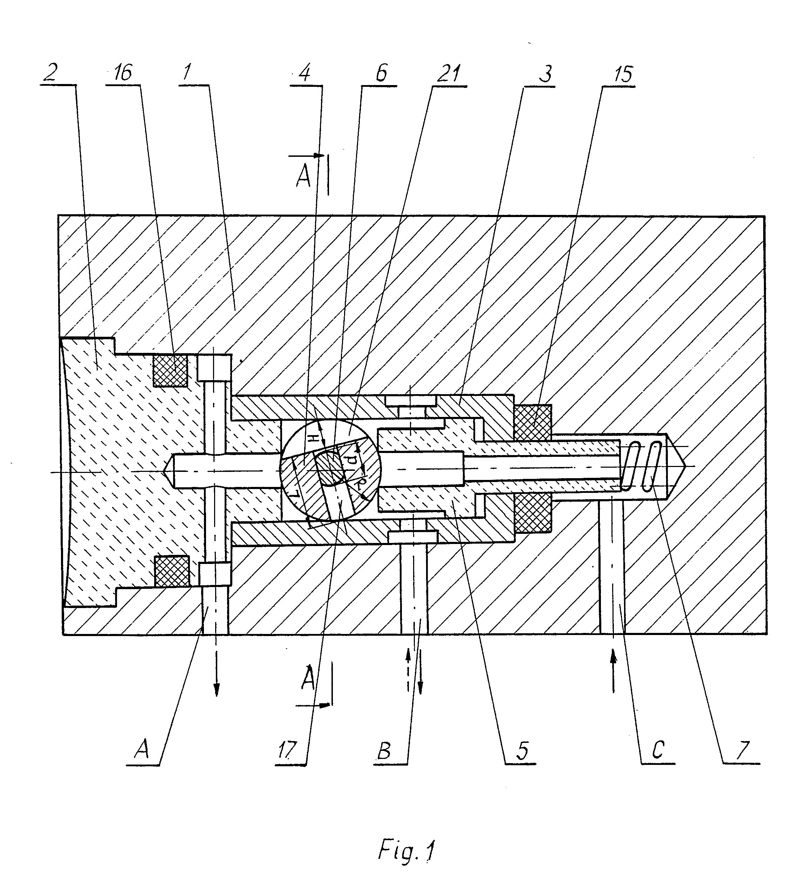

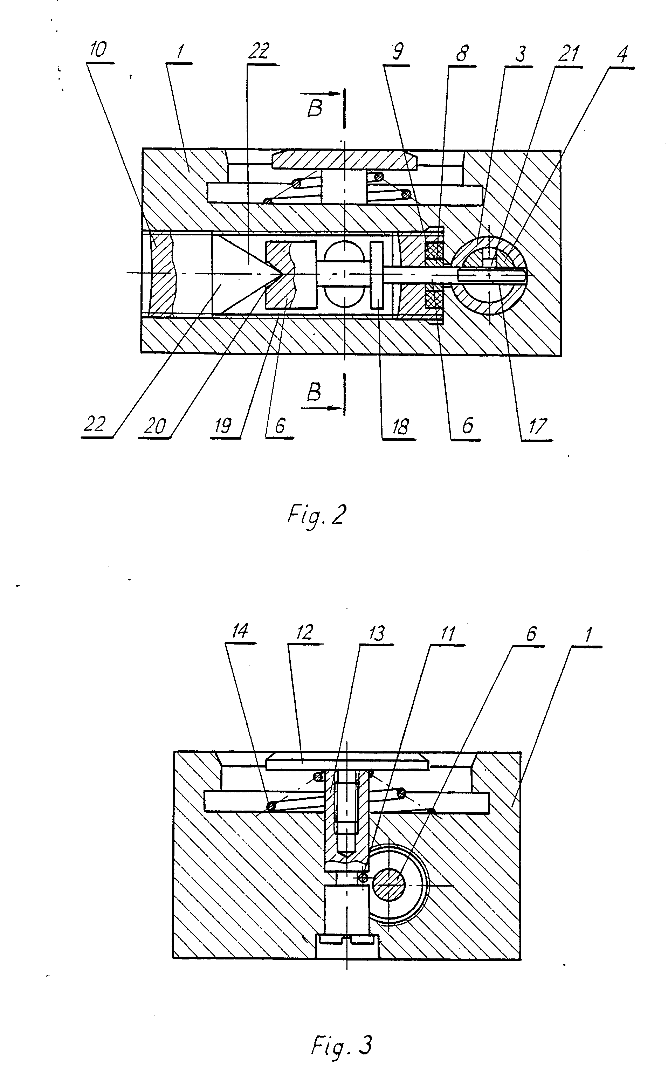

The subject of this present invention has been embodied in the drawing where Fig. 1 shows a longitudinal section of the distribution valve Fig. 2 shows section A-A marked in Fig. 1, and Fig. 3 shows section B-B marked in Fig. 2. The hydraulic distribution valve according to this present invention consists of body 1 inside which there is spherical closing component 4 provided with two grooves 17, 21 perpendicular to each other. Groove 17 is parallel to the longitudinal axis of lever 6 and groove 21 is perpendicular to the longitudinal axis of lever 7. The end of control lever 6 is placed inside groove 17. Height H of groove 21 is smaller than radius R of spherical closing component 4 whereas height L of groove 17 is at least equal to the sum of radius R of ball 4 and half dimension d of the larger side of lever 6 in its transversal section, that is, L≥R + 1 2 d. Groove 21 is used for controlling, that is, it connects the hydraulic cylinder to a delivery pipe or a drain pipe.

Closing component 4 is accommodated inside bush 3 between two seats 2, 5. Seat 2 is permanently sealed with seal 16 pressing bush 3 to a recess in the hole of body 1.

Seat 5 is movable and pressed to closing component 4 by spring 7 and by the liquid pressure acting upon sealing seal 15 with the face of seat 5. Body 1 has made therein canal A connected to the drain pipe, canal B connected to the hydraulic cylinder, and canal C connected to the delivery pipe.

Lever 6 is provided with crank 18 and pin 11 mounted in tappet 13 transversely to the axis of lever 6. Tappet 13 is brought in plane motion by means of push button 12. The plane motion of tappet 13 is obtained by means of spring 14. Lever 6 is sealed in hole 19 with sealing rings 8, 9 using sealing screw 10. The free end of lever 6 has a larger diameter, so that cone 22 of screw 10 should engage its groove 20. Depressing push button 12 causes spring 14 to deflect and tappet 13 to move downwards. Tappet 13 moving downwards engages pin 11 and, by means of crank 18, causes control lever 6 to rotate. Control lever 6 rotates spherical closing component 4 through a slight angle, thereby connecting delivery canal C to canal B connected to the hydraulic cylinder.

After the pressure on push-button 12 has been released. spring 14 causes tappet 13 to return to its original position and engages closing component 4. Closing component 4 cuts off now canal B from canal C and. simultaneously. connects canal B to canal A connected to the drain pipe.

## Claims

1. A three-way hydraulic distribution valve connecting a hydraulic cylinder either to a delivery pipe or to a drain pipe and including a closing component rotatably mounted inside the body of the valve between two sealing seats mounted in that same body. the closing component being controlled. that is. being rotated by means of a lever mounted in the groove of the closing component, characterised in that spherical closing component 4 has groove 21 perpendicular to groove 17 for lever 6, height H of groove 21 being smaller than radius R of closing component 4 and height L of groove 17 being at least equal to the sum of radius R of closing component 4 and half dimension d of the larger side of lever 6 in its cross section.

2. A three-way hydraulic distribution valve according to Claim 1. characterised in that control lever 6 is mounted in hole 19 passing through the axis of spherical closing component 4 and provided with crank 18 and pin 11 mounted in tappet 13 of push-button 12 perpendicularly to the axis of lever 6.

3. A three-way hydraulic distribution valve according to Claim 2. characterised in that control lever 6 is sealed in hole 19 with sealing rings 8. 9 by means of screw 10.

4. A three-way hydraulic distributor according to Claim 3. characterised in that groove 20 made in the face of the free end of lever 6 accommodates cone 22 of screw 10.

*Fig. 1*

Fig. 2

Fig. 3